(19) Europäisches Patentamt
European Patent Office
Office européen des brevets

(11) EP 0 745 623 B1

(12) # EUROPÄISCHE PATENTSCHRIFT

(45) Veröffentlichungstag und Bekanntmachung des Hinweises auf die Patenterteilung:
**05.01.2000 Patentblatt 2000/01**

(51) Int Cl.[7]: **C08F 279/02**, C08F 4/34

(21) Anmeldenummer: **96107835.9**

(22) Anmeldetag: **17.05.1996**

(54) **Elastisch-thermoplastische Pfropfpolymerisate mit verbesserten Eigenschaften**

Elastic thermoplastic graft polymers with improved properties

Polymères greffés élastiques thermoplastiques à propriétés améliorées

(84) Benannte Vertragsstaaten:
**BE DE ES FR GB IT NL**

(30) Priorität: **29.05.1995 DE 19519622**

(43) Veröffentlichungstag der Anmeldung:
**04.12.1996 Patentblatt 1996/49**

(73) Patentinhaber: **BAYER AG**
**51368 Leverkusen (DE)**

(72) Erfinder:
- **Eichenauer, Herbert, Dr.**
**41539 Dormagen (DE)**
- **Bohnenpoll, Martin, Dr.**
**51061 Köln (DE)**
- **Schmidt, Adolf, Dr.**
**51061 Köln (DE)**
- **Alberts, Heinrich, Dr.**
**51519 Odenthal (DE)**

(56) Entgegenhaltungen:
**EP-A- 0 282 854**
**EP-A- 0 375 932**
**EP-A- 0 569 778**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 0 745 623 B1

**Beschreibung**

Gegenstand der Erfindung sind elastisch-thermoplastische Pfropfpolymerisate, die durch Emulsionspolymerisation unter Verwendung eines speziellen Initiatorsystems hergestellt werden sowie darauf basierende thermoplastische Formmassen.

Die Herstellung von elastisch-thermoplastischen Pfropfpolymerisaten, z.B. von Pfropfkautschuken aus Vinylmonomeren und Kautschuken durch Emulsionspolymerisation ist bekannt und in zahlreichen Schriften, z.B. der EP-A 154 244, beschrieben.

Dabei wird die Pfropfpolymerisation üblicherweise durch Alkali- oder Ammoniumsalze der Peroxodischwefelsäure oder durch organische Peroxide als Radikalstarter initiiert.

Bei Verwendung dieser Initiatoren müssen bei der Pfropfreaktion zur Erzielung einer ausreichend hohen Latexstabilität, insbesondere bei Anquellung des Kautschuklatex mit den Pfropfmonomeren, Emulgatoren zugesetzt werden. Neben einem unerwünschten Schäumen, z.B. bei der Entfernung von Restmonomeren durch Latexentgasung nach erfolgter Pfropfpolymerisation, führen diese Emulgatoren sehr oft zu unerwünschten Eigenschaften der resultierenden Produkte (z.B. Verfärbungen, Verminderung von Härte oder Wärmeformbeständigkeit, Veränderung der Fließfähigkeit u.a.).

Prinzipiell ist es zwar bekannt, bei Emulsionspolymerisationen Azoinitiatoren mit oberflächenaktiven Funktionalitäten einzusetzen (vgl. EP-A 65 136, EP-A 65 661); diese Initiatoren sind jedoch wegen umständlicher Synthesen im technischen Maßstab schlecht zugänglich, außerdem sind Azoinitiatoren zur Durchführung von Pfropfpolymerisationen nur bedingt geeignet (vgl. z.B. H.A.J. Battaerd, G.W. Tregear: Graft Copolymers, Wiley Interscience, New York 1970) Gegenstand der Erfindung sind elastisch-thermoplastische Pfropfpolymerisate, die durch radikalische Emulsionspolymerisation von harzbildenden Vinylmonomeren in Gegenwart von mindestens einem in Latexform vorliegenden Kautschuk unter Verwendung einer Kombination aus einer oberflächenaktiven Peroxidverbindung der allgemeinen Formel (I)

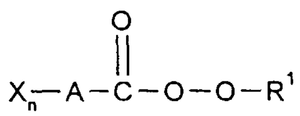

(I)

worin bedeuten

$R^1$ Alkyl, Cycloalkyl- und Arylreste mit 4 bis 20 Kohlenstoffatomen,

X die Reste -COOH und -$SO_3$H sowie deren Alkali-, Erdalkali- oder Ammoniumsalze,

n eine ganze Zahl im Bereich von 1 bis 6; n steht bevorzugt für die Zahlen 1 und 2,

A Alkylen, Cycloalkylen- und Arylenreste mit 6 bis 40, vozugsweise 10 bis 17, Kohlenstoffatomen

und einem Reduktionsmittel als Initiatorsystem hergestellt werden sowie darauf basierende Formmassen. Pfropfpolymerisat bezeichnet hier das Reaktionsprodukt der Pfropfpolymerisation, d.h. im allgemeinen ein Gemisch aus eigentlichem Pfropfpolymerisat und freiem Copolymerisat der Pfropfmonomeren.

Gegenüber den bisher bekannten elastisch-thermoplastischen Pfropfpolymerisaten zeichnen sich die erfindungsgemäßen Polymerisate durch einen ausgezeichneten hellen Farbton im nichteingefärbten Zustand (Rohton) und sehr hohe Zähigkeitswerte darauf basierender thermoplastischer Formmassen vom ABS-Typ aus.

Als Kautschuke zur Herstellung der erfindungsgemäßen elastisch-thermoplastischen Pfropfpolymerisate eignen sich im Prinzip alle in Emulsionsform vorliegenden kautschukartigen Polymerisate mit einer Glasübergangstemperatur unter 0°C. Verwendet werden können z.B. Dienkautschuke, d.h. Homopolymerisate von konjugierten Dienen mit 4 bis 8 C-Atomen wie Butadien, Isopren, Chloropren oder deren Copolymerisate mit bis zu 60 Gew.-%, bevorzugt bis zu 30 Gew.-% eines Vinylmonomeren, z.B. Acrylnitril, Methacrylnitril, Styrol, $\alpha$-Methylstyrol, Halogenstyrole, $C_1$-$C_4$-Alkylstyrole, $C_1$-$C_8$-Alkylacrylate, $C_1$-$C_8$-Alkylmethacrylate, Alkylenglykoldiacrylate, Alkylenglykoldimethacrylate, Divinylbenzol, Acrylatkautschuke, d.h. Homo- und Copolymerisate von $C_1$-$C_{10}$-Alkylacrylaten, z.B. Homopolymerisate von Ethylacrylat, Butylacrylat oder Copolymerisate mit bis zu 40 Gew.-%, bevozugt nicht mehr als 10 Gew.-% Mono-Vinylmonomeren, z.B. Styrol, Acrylnitril, Vinylbutylether, Acrylsäure(ester), Methacrylsäure(ester), Vinylsulfonsäure. Bevorzugt werden solche Acrylatkautschukhomo- bzw. -copolymerisate eingesetzt, die 0,01 bis 8 Gew.-% Divinyl- oder

Polyvinylverbindungen und/oder N-Methylolacrylamid bzw. N-Methylolmethacrylamid oder sonstige Verbindungen enthalten, die als Vernetzer wirken, z.B. Divinylbenzol, Triallylcyanurat.

Bevorzugt sind Polybutadienkautschuke, SBR-Kautschuke mit bis zu 30 Gew.-% einpolymerisiertem Styrol und Acrylatkautschuke, besonders solche, die eine Kern-Schalen-Struktur aufweisen, z.B. wie in DE-OS 3 006 804 beschrieben.

Zur Herstellung der erfindungsgemäßen Pfropfpolymerisate kommen Latices mit mittleren Teilchendurchmessern $d_{50}$ von 0,05 bis 2,0 µm, vorzugsweise von 0,08 bis 1,0 µm und besonders bevorzugt von 0,1 bis 0,5 µm, in Betracht. Die mittleren Teilchendurchmesser werden mittels Ultrazentrifuge (vgl. W. Scholtan, H. Lange: Kolloid-Z. u. Z. Polymere 250, S. 782-796 (1972) bestimmt. Gemische mehrerer Latices können ebenfalls verwendet werden (vergl. DE-OS 1 813 719). Diese Kautschuk-Latices können durch Emulsionspolymerisation hergestellt werden, die erforderlichen Reaktionsbedingungen, Hilfsstoffe und Arbeitstechniken sind grundsätzlich bekannt.

Es ist auch möglich, nach bekannten Methoden zunächst ein feinteiliges Kautschukpolymerisat herzustellen und es anschließend in bekannter Weise zur Einstellung der erforderlichen Teilchengröße zu agglomerieren. Einschlägige Techniken sind beschrieben (vgl. EP-B 0 029 613; EP-B 0 007 810; DD-PS 144 415; DE-AS 1 233 131; DE-AS 1 258 076; DE-OS 2 101 650; US-PS 1 379 391).

Ebenfalls kann nach der sogenannten Saatpolymerisationstechnik gearbeitet werden, bei der zunächst ein feinteiliges Polymerisat, z.B. ein Butadienpolymerisat, hergestellt und dann durch Weiterumsatz mit Butadien enthaltenden Monomeren zu größeren Teilchen weiterpolymerisiert wird.

Prinzipiell kann man Kautschukpolymerisatlatices auch herstellen durch Emulgieren von fertigen Kautschukpolymerisaten in wäßrigen Medien (vgl. japanische Patentanmeldung 55 125 102).

Als Pfropfmonomere, die in Gegenwart der in Emulsionsform vorliegenden kautschukartigen Polymerisate polymerisiert werden, sind praktisch alle Verbindungen geeignet, die in Emulsion zu thermoplastischen Harzen polymerisiert werden können, z.B. Vinylaromaten der Formel (I) oder Verbindungen der Formel (II) bzw. deren Gemische,

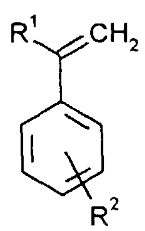

(I)

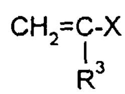

(II)

wobei

$R^1$ Wasserstoff oder Methyl,

$R^2$ Wasserstoff, Halogen oder Alkyl mit 1 bis 4 Kohlenstoffatomen in ortho-, meta- oder para-Stellung

$R^3$ Wasserstoff oder Methyl und

X eine CN-(=Cyano), $R^4$OOC-(=Ester) oder $R^5R^6$NOC-(=Amid)-gruppe darstellt. Hierbei bedeutet $R^4$ Wasserstoff oder Alkyl mit 1 bis 4 Kohlenstoffatomen. $R^5$ und $R^6$ unabhängig Wasserstoff, Phenyl oder Alkyl mit 1 bis 4 Kohlenstoffatomen.

Beispiele für Verbindungen der Formel I sind Styrol, α-Methlylstyrol, p-Methylstyrol und Vinyltoluol. Beispiele für Verbindungen der Formel II sind Acrylnitril und Methylmethacrylat. Weitere geeignete Monomere sind z.B. Vinylacetat und N-Phenylmaleinimid.

Bevorzugte Monomere sind Mischungen aus Styrol und Acrylnitril, α-Methylstyrol und Acrylnitril, aus Styrol, Acrylnitril und Methylmethacrylat sowie Kombinationen dieser Monomerengemische mit N-Phenylmaleinimid.

Bevorzugte erfindungsgemäße Pfropfpolymerisate sind solche, die durch Pfropfpolymerisation von Styrol und Acrylnitril im Gew.-Verhältnis 90: 10 bis 50:50, vorzugsweise 80:20 bis 65:35 (wobei Styrol ganz oder teilweise ersetzt werden kann durch α-Methlysryrol oder Methylmethacrylat) in Gegenwart von solchen Mengen Kautschuk, vorzugsweise Polybutadien, erhalten werden, daß Pfropfpolymerisate mit Kautschukgehalten von 20 bis 80 Gew.-%, vorzugsweise 30 bis 75 Gew.-% und besonders bevorzugt 35 bis 70 Gew.-% resultieren.

Als oberflächenaktive Peroxide werden Verbindungen der allgemeinen Formel (I) eingesetzt, bevorzugt steht der Rest A für einen Rest der Formel (II).

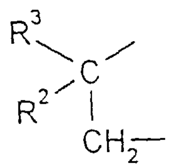

(II)

worin die Reste $R^2$ und $R^3$ für H, $C_1$-$C_{40}$-Alkyl, $C_3$-$C_{40}$-Cycloalkyl, Aryl, Aralkyl oder Halogen stehen, mit der Einschränkung, daß die Summe der Kohlenstoffatome beider Reste größer als 16 ist oder die Reste Bestandteil eines $C_5$-$C_{10}$-aliphatischen oder $C_6$-$C_{14}$-aromatischen Ringsystems sind, wobei der Rest der Formel (II) insgesamt maximal 40 Kohlenstoffatome enthält.

Besonders bevorzugt sind Peroxide (I), worin A für Alkylen-, Cycloalkylen- und Arylenreste mit 10 bis 17 Kohlenstoffatomen steht.

Die Peroxide der allgemeinen Formel (I) sind bekannt, ihre Herstellung ist in DE-OS 4 215 484 beschrieben.

Erfindungsgemäß einsetzbare Reduktionsmittel sind vorzugsweise wasserlösliche Verbindungen, z.B. Salze von Sulfinsäuren, Salze der schwefligen Säure, Natriumdithionit, Natriumsulfit, Natriumhyposulfit, Natriumhydrogensulfit, Ascorbinsäure sowie deren Salze, Rongalit C (Natriumformaldehydsulfoxylat), Mono- und Dihydroxyaceton, Zukker (z.B. Glucose), Eisen(II)-salze wie z.B. Eisen(II)sulfat, Zinn(II)-salze wie z.B. Zinn(II)chlorid, Titan(III)-salze wie z. B. Titan(III)sulfat. Bevorzugte Reduktionsmittel sind wasserlösliche Verbindungen wie z.B. Ascorbinsäure(salze) oder Rongalit.

Die Mengen an erfindungsgemäß einzusetzendem Peroxid (I) und Reduktionsmittel sind frei wählbar, im allgemeinen liegen sie bei 0,05 bis 2 Gew.-Teilen Peroxid und 0,05 bis 1 Gew.-Teilen Reduktionsmittel, bevorzugt bei 0,1 bis 1 Gew.-Teilen Peroxid und 0,1 bis 0,8 Gew.-Teilen Reduktionsmittel (jeweils bezogen auf 100 Gew.-Teile Monomer); das Gewichtsverhältnis Peroxid (I): Reduktionsmittel ist vorzugsweise 10:1 bis 1:3, besonders bevorzugt 7:1 bis 1:1.

Bei der Herstellung der erfindungsgemäßen elastisch-thermoplastischen Formmassen können die üblicherweise als Molekulargewichtsregler eingesetzten Verbindungen z.B. Mercaptane oder dimeres α-Methylstyrol verwendet werden.

Prinzipiell können zusätzlich zur oberflächenaktiven Peroxidverbindung (I) auch Emulgatoren (anionische, kationische und nichtionische Emulgatoren) eingesetzt werden, bevorzugt wird jedoch kein zusätzlicher Emulgator verwendet

Als Reaktionstemperaturen können solche Temperaturen gewählt werden, bei denen die eingesetzten Initiatorsysteme in ausreichendem Maße Radikale zur Auslösung und Aufrechterhaltung der Polymerisationsreaktion liefern. Dieser Temperaturbereich liegt etwa von 30°C bis 100°C, vorzugsweise von 50°C bis 75°C.

Ein weiterer Erfindungsgegenstand sind thermoplastische Formmassen enthaltend die erfindungsgemäß hergestellten elastisch-thermoplastischen Pfropfpolymerisate.

Zur Erzeugung dieser Formmassen wird das Pfropfpolymerisat mit einem Matrixharz gemischt.

Geeignete Matrixharze bestehen z.B. aus Copolymerisaten des Styrols und Acrylnitrils im Gewichtsverhältnis 90:10 bis 50:50, wobei das Styrol ganz oder teilweise durch α-Methylstryol oder Methylmethacrylat ersetzt werden kann und wobei gegebenenfalls anteilmäßig bis zu 25 Gew.-%, bezogen auf Matrixharz, ein weiteres Monomeres aus der Reihe Maleinsäureanhydrid, Malein- oder Fumarsäurebisalkylester, Maleinsäureimid, N-(Cyclo)-alkylmaleinimid, N-(Alkyl)-phenylmaleinimid, Inden mitverwendet werden kann.

Einzelheiten zur Herstellung dieser Harze sind beispielsweise in der DE-AS 2 420 358, der DE-AS 2 724 360 und der EP-A 255 889 beschrieben. Durch Masse- oder Lösungspolymerisation hergestellte Matrixharze haben sich besonders bewährt. Zur Herstellung der Formmassen kann das Pfropfpolymerisat mit dem Matrixharz auf verschiedene Weise gemischt werden. Wurde das Matrixharz durch Emulsionspolymerisation hergestellt, so können die Latices gemischt und gemeinsam ausgefällt oder auch getrennt ausgefällt und die resultierende Festsubstanzen gemischt werden.

Wird das Matrixharz durch Lösungs- oder Massepolymerisation hergestellt, so muß das Pfropfpolymerisat getrennt ausgefällt werden. Hierzu verwendet man bekannte Methoden, beispielsweise Zusatz von Salzen oder Säuren, wonach die Fällprodukte gewaschen, getrocknet und gegebenenfalls aus der Pulverform in eine Granulatform überführt werden. Als Mischvorrichtungen für Fällprodukte bzw. Granulate kommen beispielsweise Mehrwalzenstühle, Mischextruder oder Innenkneter in Betracht.

Der Anteil der erfindungsgemäßen elastisch-thermoplastischen Pfropfprodukte an der Gesamtmenge der erfindungsgemäßen Formmassen beträgt 10 bis 65 Gew.-%, wobei der Anteil der Pfropfpolymerisate geringer ist, da nicht alle Monomere Pfropfäste bilden.

Bevorzugte Formmassen haben folgende Zusammensetzung:

| | |
|---|---|
| Pfropfprodukt | 30 bis 60 Gew.-Teile |
| Matrixharze | 70 bis 40 Gew.-Teile, |

wobei mit Anteilen von 40 bis 60 Gew.-Teilen Pfropfprodukt die höchsten Zähigkeiten erreicht werden

Den Formmassen der Erfindung können bei der Herstellung, Aufarbeitung, Weiterverarbeitung und Endverformung die erforderlichen bzw. zweckmäßigen Additive zugesetzt werden, z.B. Antioxidantien, UV-Stabilisatoren, Peroxidzerstörer, Antistatika, Gleitmittel, Flammschutzmittel, Füll- oder Verstärkerstoffe (Glasfasern, Kohlefasern, etc.) und Farbmittel.

Die Endverformung kann auf handelsüblichen Verarbeitungsaggregaten vorgenommen werden und umfaßt z.B. Spritzgußverarbeitung, Plattenextrusion mit gegebenenfalls anschließender Warmverformung, Kaltverformung, Extrusion von Rohren und Profilen oder Kalander-Verarbeitung.

Die erfindungsgemäß hergestellten Pfropfpolymerisate können auch als Modifikatoren zur Erhöhung der Zähigkeit einzelner oder aus verschiedenen Materialien abgemischter thermoplastischer Formmassen dienen. Beispiele für modifizierbare Formmassen sind:

a) Weitere Homo- und Mischpolymerisate von Styrol und alkylsubstituiertem Styrol mit vinylgruppenhaltigen Monomeren, z.B. Polystyrol, Poly(p-methyl)styrol, Poly(styrol-co-maleinsäureanhydrid), Poly(styrol-co-acrylnitril-co-maleinsäure-N-phenylimid), Poly(styrol-co-maleinsäure-N-phenylimid),

b) Homo- und Mischpolymerisate von $C_1$-$C_4$-Alkyl(meth)acrylaten mit vinylgruppenhaltigen Monomeren, z.B. Polymethylmethacrylat, Poly(methylmethacrylat-co-styrol), Poly(methylmethacrylat-co-maleinsäureanhydrid), Poly(methylmethacrylat-co-styrol-co-maleinsäureanhydrid),

c) halogenhaltige Polymerisate, z.B. Polyvinylchlorid, Polyvinylidenchlorid, chloriertes Polyethylen,

d) Polycarbonate, z.B. auf Basis von Bisphenol A, 1,1-Bis-(4-hydroxyphenyl)-3,3,5-trimethylcyclohexan, Tetramethylbisphenol A, Tetrabrombisphenol A,

e) Polyester, z.B. auf Basis Terephthalsäure, Isophthalsäure, Ethylenglykol, Butandiol,

f) Polyamide, z.B. auf Basis ε-Caprolactam, Laurinlactam, Adipinsäure/Hexamethylendiamin.

Dabei werden die erfindungsgemäß hergestellten Pfropfkautschuke in Mengen von 1 bis 80, vorzugsweise 5 bis 50 Gew.-%, bezogen auf die gesamte Formmasse, eingesetzt.

In den folgenden Beispielen sind Teile immer Gewichtsteile und % immer Gew.-%, wenn nicht anders angegeben.

**Beispiele und Vergleichsbeispiele**

Beispiel 1

55 Gew.-Teile (gerechnet als Feststoff) eines durch radikalische Polymerisation hergestellten anionisch emulgierten Polybutadienlatex mit einem $d_{50}$-Wert von ca. 443 nm wurden mit Wasser auf einen Feststoffgehalt von ca. 20 Gew.-% gebracht, mit 0,125 Gew.-Teilen des Umsetzungsproduktes aus Octadecenylbernsteinsäureanhydrid und tert.-Butylhydroperoxid in Form der in DE 4 215 484, Beispiel 14, beschriebenen Flüssigkeit versetzt und auf 63°C erwärmt. Danach wurden parallel

a) 45 Gew.-Teile eines Gemisches aus 73 Gew.-% Styrol und 27 Gew.-% Acrylnitril,

b) 0,125 Gew.-Teile des oben beschriebenen Umsetzungsproduktes und

c) 0,05 Gew.-Teile Natriumascorbat (in Form einer 0,5%igen wäßrigen Lösung)

innerhalb 4 Stunden zudosiert. Nach einer 4-stündigen Nachreaktionszeit wurde der Pfropflatex nach Zugabe von ca. 1,0 Gew.-Teilen eines phenolischen Antioxidans mit einem Magnesiumsulfat/Essigsäure-Gemisch koaguliert und nach dem Waschen mit Wasser das resultierende Pulver bei 70°C in Vakuum getrocknet.

Beispiel 2

Beispiel 1 wurde wiederholt, wobei die Mengen an Umsetzungsprodukt aus Octadecenylbernsteinsäureanhydrid und tert.-Butylhydroperoxid in der Vorlage und im Zulauf jeweils verdoppelt wurden und auch die Natriumascorbatmenge verdoppelt wurde.

Beispiel 3 (Vergleich)

Beispiel 1 wurde wiederholt, wobei anstelle des oben beschriebenen Umsetzungsproduktes tert.-Butylhydroperoxid eingesetzt wurde. Der Latex konnte nicht aufgearbeitet werden, da er im Laufe der Reaktion koagulierte

Beispiel 4 (Vergleich)

Beispiel 3 wurde wiederholt, wobei zusätzlich parallel zu den übrigen Zuläufen innerhalb von 4 Stunden 1 Gew.-Teil (gerechnet als Festsubstanz) des Natriumsalzes eines Harzsäuregemisches (Dresinate 731, gelöst in alkalischem Wasser) zudosiert wurde.

Beispiel 5 (Vergleich)

Beispiel 1 wurde wiederholt, wobei anstelle des oben beschriebenen Umsetzungsproduktes und der Natriumascorbatlösung 0,25 Gew.-Teile $K_2S_2O_8$ (in Form einer 1,64%igen wäßrigen Lösung, Zusatz in die Vorlage) eingesetzt wurden. Der Latex enthielt nach Beendigung der Reaktion eine hohe Koagulatmenge (ca. 4,8 Gew.-%, bezogen auf Gesamtfeststoff), konnte jedoch noch aufgearbeitet werden.

Beispiel 6

40 Gew.-Teile (gerechnet als Feststoff) eines durch radikalische Polymerisation hergestellten anionisch emulgierten Polybutadienlatex mit einem $d_{50}$-Wert von ca. 277 nm wurden mit Wasser auf einen Feststoffgehalt von ca. 20 Gew.-% gebracht, mit 0,125 Gew.-Teilen des in Beispiel 1 beschriebenen Umsetzungsproduktes versetzt und auf 63 °C erwärmt. Danach wurden parallel

a) 60 Gew.-Teile eines Gemisches aus 73 Gew.-% Styrol und 27 Gew.-% Acrylnitril,

b) 0,25 Gew.-Teile des Umsetzungsproduktes und

c) 0,10 Gew.-Teile Natriumascorbat (in Form einer 0,5%igen wäßrigen Lösung)

innerhalb 4 Stunden zudosiert. Nach einer 4-stündigen Nachreaktionszeit wurde analog Beispiel 1 aufgearbeitet.

Beispiel 7 (Vergleich)

Beispiel 6 wurde wiederholt, wobei anstelle des oben beschriebenen Umsetzungsproduktes und der Natriumascorbatlösung 0.5 Gew.-Teile $K_2S_2O_8$ (in Form einer 1,64%igen wäßrigen Lösung, Zusatz in der Vorlage) eingesetzt wurden. Zusätzlich wurde parallel zu den übrigen Zuläufen innerhalb von 4 Stunden 1 Gew.-Teil (gerechnet als Festsubstanz) des Natriumsalzes eines Harzsäuregemisches (Dresinate 731, gelöst in alkalischem Wasser) zudosiert.

**Ausprüfung der Pfropfpolymerisate**

40 Gew.-Teile Pfropfpolymerisat wurden mit 60 Gew.-Teilen eines Styrol/Acrylnitril-Copolymerharzes (72:28, $\overline{M}_w \approx 115\,000$, $\overline{M}_w/\overline{M}_n - 1 \leq 2$), 2 Gew.-Teilen Ethylendiaminbisstearylamid und 0,1 Gew.-Teilen eines Silikonöls in einem Innenkneter vermischt und anschließend zu Prüfstäben verspritzt. Ermittelt wurde die Kerbschlagzähigkeit $a_k$ nach ISO 180/1A (Einheit: kJ/m$^2$), die Kugeldruckhärte $H_c$ nach DIN 53 456 (Einheit: N/mm$^2$), die Wärmeformbeständigkeit (Vicat B) nach DIN 53 460 (Einheit: °C), sowie der Rohton (visuelle Beurteilung nach den Abstufungen

--sehr dunkel
-dunkel
omittel
+hell
++sehr hell).

Die an den unter Verwendung der beschriebenen Pfropfpolymerisate hergestellten Formmassen ermittelten Prüfdaten sind in Tabelle 1 zusammengestellt. Daraus ist ersichtlich, daß die erfindungsgemäßen Pfropfpolymerisate zu Formmassen mit deutlich verbesserter Zähigkeit und hellerem Rohton unter Erhalt der sonstigen Eigenschaften führen.

Tabelle 1:

| Prüfdaten der Formmassen | | | | |
|---|---|---|---|---|
| Pfropfpolymerisat aus Beispiel | $a_k$ (kJ/m$^2$) | $H_c$ (N/mm$^2$) | Vicat B (°C) | Rohton |
| 1 | 47 | 72 | 99 | ++ |
| 2 | 50 | 72 | 99 | ++ |
| 3 (Vergleich) | –– | –– | –– | –– |
| 4 (Vergleich) | 43 | 71 | 98 | o |
| 5 (Vergleich) | 39 | 86 | 99 | - |
| 6 | 35 | 97 | 102 | ++ |
| 7 (Vergleich) | 30 | 97 | 103 | -- |

**Patentansprüche**

1. Durch radikalische Emulsionspolymerisation von harzbildenden Vinylmonomeren in Gegenwart von in Latexform vorliegendem Kautschuk unter Verwendung einer Kombination aus einem Peroxid der Formel (I)

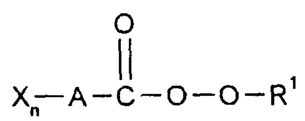

(I)

worin bedeuten

$R^1$ Alkyl, Cycloalkyl- und Arylreste mit 4 bis 20 Kohlenstoffatomen,

X die Reste -COOH und $-SO_3H$ sowie deren Alkali-, Erdalkali- oder Ammoniumsalze,

n eine ganze Zahl im Bereich von 1 bis 6,

A Alkylen, Cycloalkylen- und Arylenreste mit 6 bis 40 Kohlenstoffatomen

und einem Reduktionsmittel als Initiatorsystem hergestellte elastisch-thermoplastische Pfropfpolymerisate.

2. Elastisch-thermoplastische Pfropfpolymerisate gemäß Anspruch 1 aus Styrol, α-Methylstyrol, Acrylnitril, Methylmethacrylat, N-Phenylmaleinimid sowie Mischungen daraus als harzbildende Monomere.

3. Elastisch-thermoplastische Pfropfpolymerisate gemäß Anspruch 1, enthaltend Polybutadien als Kautschuk.

4. Elastisch-thermoplastische Pfropfpolymerisate gemäß Anspruch 1, worin es sich bei dem Rest A in Formel (I) um Reste mit der Formel (II) handelt

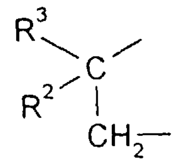

(II),

worin die Reste $R^2$ und $R^3$ für H, $C_1$-$C_{40}$-Alkyl, $C_3$-$C_{40}$-Cycloalkyl, Aryl, Aralkyl oder Halogen stehen, mit der Einschränkung, daß die Summe der Kohlenstoffatome beider Reste größer als 16 ist oder die Reste Bestandteil eines $C_5$-$C_{10}$-aliphatischen oder $C_6$-$C_{14}$-aromatischen Ringsystems sind, wobei der Rest der Formel (II) insgesamt maximal 40 Kohlenstoffatome enthält.

**5.** Elastisch-thermoplastische Pfropfpolymerisate gemäß Anspruch 1, worin in Formel (I) A für Alkylen-, Cycloalkylen-, und Arylenreste mit 10 bis 17 Kohlenstoffatomen steht.

**6.** Thermoplastische Formmassen enthaltend elastisch-thermoplastische Pfropfpolymerisate gemäß Anspruch 1 und mindestens ein thermoplastisches Harz.

**7.** Thermoplastische Formmassen, gemäß Anspruch 6, worin das thermoplastische Harz ein Copolymerisat aus Styrol und Acrylnitril im Gewichtsverhältnis 90:10 bis 50:50 ist, wobei das Styrol ganz oder teilweise durch α-Methylstyrol oder Methylmethacrylat ersetzt werden kann.

**8.** Thermoplastische Formmassen, gemäß Anspruch 6, worin als thermoplastische Harz mindestens ein Polycarbonat und/oder Polyesterharz enthalten ist.

**9.** Verfahren zur Herstellung von elastisch-thermoplastischen Pfropfpolymerisaten durch radikalisch initiierte Polymerisation harzbildender Vinylmonomerer in Gegenwart eines Kautschuklatex, dadurch gekennzeichnet, daß als radikalischer Initiator ein Peroxid der Formel (I) in Kombination mit einem Reduktionsmittel verwendet wird.

## Claims

**1.** Elastic-thermoplastic graft polymers manufactured by the radical emulsion polymerisation of resin-forming vinyl monomers in the presence of rubber present in latex form with the use of a combination of a peroxide of formula (I)

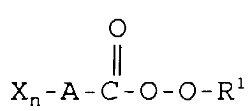

(I)

where

$R^1$ signifies alkyl, cycloalkyl and aryl groups with 4 to 20 carbon atoms,

X the groups -COOH and $-SO_3H$ as well as their alkali, alkaline-earth or ammonium salts,

n a whole number in the range from 1 to 6,

A alkylene, cycloalkylene and arylene groups with 6 to 40 carbon atoms

and a reducing agent as initiator system.

**2.** Elastic-thermoplastic graft polymers according to claim 1 from styrene, α-methyl styrene, acrylonitrile, methyl methacrylate, N-phenyl maleiimide as well as mixtures thereof as resin-forming monomers.

3. Elastic-thermoplastic graft polymers according to claim 1, containing polybutadiene as rubber.

4. Elastic-thermoplastic graft polymers according to claim 1, wherein there are involved in the case of group A in formula (I) groups with the formula (II)

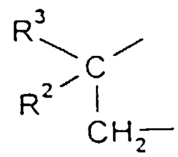

(II),

wherein the groups $R^2$ and $R^3$ stand for H, $C_1$-$C_{40}$-alkyl, $C_3$-$C_{40}$-cycloalkyl, aryl, aralkyl or halogen, subject to the proviso that the sum of the carbon atoms of both groups is greater than 16 or the groups form part of a $C_5$-$C_{10}$-aliphatic or $C_6$-$C_{14}$-aromatic ring system, wherein the group of formula (II) contains in total not more than 40 carbon atoms.

5. Elastic-thermoplastic graft polymers according to claim 1, wherein in formula (I) A stands for alkylene, cycloalkylene and arylene groups with 10 to 17 carbon atoms.

6. Thermoplastic moulding compositions containing elastic-thermoplastic graft polymers according to claim 1 and at least one thermoplastic resin.

7. Thermoplastic moulding compositions, according to claim 6, wherein the thermoplastic resin is a copolymer of styrene and acrylonitrile in the ratio by weight 90:10 to 50:50, wherein the styrene can be replaced wholly or partly by $\alpha$-methyl styrene or methyl methacrylate.

8. Thermoplastic moulding compositions, according to claim 6, wherein at least one polycarbonate and/or polyester resin is included as a thermoplastic resin.

9. Method for manufacturing elastic-thermoplastic graft polymers by the radically initiated polymerisation of resin-forming vinyl monomers in the presence of a rubber latex, characterised in that a peroxide of formula (I) is used as radical initiator in combination with a reducing agent.

**Revendications**

1. Polymères greffés élastiques-thermoplastiques préparés par polymérisation radicalaire en émulsion de monomères vinyliques formateurs de résine en présence de caoutchouc présent sous forme de latex, en utilisant une combinaison d'un peroxyde répondant à la formule (I)

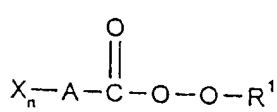

(I)

dans laquelle

$R^1$ représente un radical alkyle, un radical cycloalkyle et un radical aryle contenant de 4 à 20 atomes de carbone,

X représente les radicaux -COOH et -$SO_3$H, ainsi que leurs sels de métaux alcalins, de métaux alcalino-terreux ou d'ammonium,

n représente un nombre entier dans le domaine de 1 à 6,

A représente un radical alkylène, un radical cycloalkylène et un radical arylène contenant de 6 à 40 atomes de carbone,

et d'un agent de réduction, à titre de système d'initiateur.

2. Polymères greffés élastiques-thermoplastiques selon la revendication 1, constitués par du styrène, de l'α-méthylstyrène, de l'acrylonitrile, du méthacrylate de méthyle, du N-phénylmaléimide, ainsi que par des mélanges de ces derniers, à titre de monomères formateurs de résine.

3. Polymères greffés élastiques-thermoplastiques selon la revendication 1, contenant du polybutadiène à titre de caoutchouc.

4. Polymères greffés élastiques-thermoplastiques selon la revendication 1, dans lesquels, en ce qui concerne le radical A dans la formule (I), il s'agit de radicaux répondant à la formule (II)

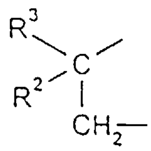

(II),

dans laquelle les radicaux $R^2$ et $R^3$ représentent un atome d'hydrogène, un groupe alkyle en $C_1$-$C_{40}$, un groupe cycloalkyle en $C_3$-$C_{40}$, un groupe aryle, un groupe aralkyle ou un atome d'halogène, avec cette restriction que la somme des atomes de carbone des deux radicaux est supérieure à 16 ou que les radicaux représentent des constituants d'un système à noyau aliphatique en $C_5$-$C_{10}$ ou à noyau aromatique en $C_6$-$C_{14}$, le radical répondant à la formule (II) contenant au total 40 atomes de carbone au maximum.

5. Polymères greffés élastiques-thermoplastiques selon la revendication 1, dans lesquels, dans la formule (I), A représente un radical alkylène, un radical cycloalkylène et un radical arylène contenant de 10 à 17 atomes de carbone.

6. Matières à mouler thermoplastiques contenant des polymères greffés élastiques-thermoplastiques selon la revendication 1 et au moins une résine thermoplastique.

7. Matières à mouler thermoplastiques selon la revendication 6, dans lesquelles la résine thermoplastique représente un copolymère de styrène et d'acrylonitrile dans le rapport pondéral de 90:10 à 50:50, le styrène pouvant être remplacé, en tout ou en partie, par de l'α-méthylstyrène ou par du méthacrylate de méthyle.

8. Matières à mouler thermoplastiques selon la revendication 6, qui contiennent, à titre de résine thermoplastique, au moins un polycarbonate et/ou une résine de polyester.

9. Procédé pour la préparation de polymères greffés élastiques-thermoplastiques par polymérisation radicalaire de monomères vinyliques formateurs de résine en présence d'un latex de caoutchouc, caractérisé en ce qu'on utilise, à titre d'initiateur radicalaire, un peroxyde répondant à la formule (I) en combinaison avec un agent de réduction.